(19) Europäisches Patentamt
European Patent Office
Office européen des brevets

(11) **EP 4 648 123 A1**

(12) **EUROPEAN PATENT APPLICATION**
published in accordance with Art. 153(4) EPC

(43) Date of publication:
**12.11.2025 Bulletin 2025/46**

(21) Application number: **24854366.2**

(22) Date of filing: **05.08.2024**

(51) International Patent Classification (IPC):
$H01M\ 4/133^{(2010.01)}$    $H01M\ 4/36^{(2006.01)}$
$H01M\ 4/587^{(2010.01)}$    $H01M\ 4/48^{(2010.01)}$
$H01M\ 4/131^{(2010.01)}$    $H01M\ 4/1393^{(2010.01)}$
$H01M\ 4/1391^{(2010.01)}$    $H01M\ 4/38^{(2006.01)}$
$H01M\ 10/052^{(2010.01)}$    $H01M\ 10/0583^{(2010.01)}$

(52) Cooperative Patent Classification (CPC):
H01M 4/131; H01M 4/133; H01M 4/1391;
H01M 4/1393; H01M 4/36; H01M 4/38; H01M 4/48;
H01M 4/587; H01M 10/052; H01M 10/0583;
H01M 10/0585; Y02E 60/10

(86) International application number:
**PCT/KR2024/011504**

(87) International publication number:
**WO 2025/037814 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 KR 20230105344**

(71) Applicant: **LG Energy Solution, Ltd.
Seoul 07335 (KR)**

(72) Inventors:
• **NOH, Suk In
Daejeon 34122 (KR)**
• **KIM, Ji Hyun
Daejeon 34122 (KR)**

(74) Representative: **Plasseraud IP
104 Rue de Richelieu
CS92104
75080 Paris Cedex 02 (FR)**

(54) **NEGATIVE ELECTRODE FOR LITHIUM SECONDARY BATTERY AND METHOD FOR MANUFACTURING SAME**

(57) A negative electrode includes a carbon-based negative electrode active material and a silicon-based negative electrode active material in a predetermined content ratio, and by controlling the orientation index (0.1) of the carbon-based negative electrode material of the negative electrode active layer including them to a certain range, it has the characteristics of high charge and discharge capacity as well as excellent lifespan characteristics. Moreover, the lithium secondary battery comprising the negative electrode has the advantage of having excellent output characteristics and can be charged in a short time even at a 1C-rate.

[FIG. 1]

(a)

(b)

EP 4 648 123 A1

## Description

[Technical Field]

The present disclosure relates to a negative electrode for a lithium secondary battery and a manufacturing method thereof.

This application claims the benefit of priority based on Korean Patent Application No. 10-2023-0105344, filed on August 11, 2023, and the entire contents of the Korean patent application are incorporated herein by reference.

[Background]

Recently, secondary batteries have been widely applied not only in small devices such as portable electronics, but also in medium and large devices such as battery packs or power storage devices in hybrid or electric vehicles. In particular, as interest in environmental issues has increased in recent years, there has been a lot of research on electric vehicles, hybrid electric vehicles, etc. that can replace vehicles that use fossil fuels such as gasoline vehicles and diesel vehicles, etc. which are the main cause of air pollution.

Conventional lithium secondary batteries are limited in application to short-range electric vehicles due to limitations in energy density. Accordingly, until now, technology has been intensively developed in the direction of increasing the energy density of lithium secondary batteries.

However, the developed lithium secondary batteries for automobiles have the issue of requiring a long time to charge after discharging during vehicle operation. Therefore, as the adoption rate of electric vehicles increases, there is a growing need to shorten the charging time to a level that is acceptable to users.

Meanwhile, a lithium secondary battery is a power generating device that can be charged and discharged by a stacked structure of a positive electrode, a separator, and a negative electrode. When a lithium secondary battery is charged, a lithium dissociation reaction is induced at the positive electrode inside the battery, in which lithium contained in the positive electrode active material is oxidized and released, and a lithium insertion reaction occurs at the negative electrode, in which lithium is reduced and goes into the negative electrode active material. Generally, the dissociation reaction in the positive electrode active material is faster than the insertion reaction in the negative electrode active material, thereby the rapid charge and discharge performance of the lithium secondary battery is mainly determined by the negative electrode.

As a negative electrode active material, materials containing graphite are widely used. The average potential when materials containing graphite release lithium is approximately 0.2 V (based on Li/Li$^+$), and the discharge potential shows a relatively flat pattern. Because of this, when graphite is used as a negative electrode active material, the voltage of the secondary battery is high and has certain advantages. However, the electrical capacity per unit mass of graphite material is 372 mAh/g, which is small. However, the current capacity of graphite materials has been improved close to the above theoretical capacity, so it is difficult to further increase the capacity. In addition, when graphite is used as a negative electrode active material, the insertion reaction of lithium ions proceeds at a slow speed, so there is a limitation of low rapid charging performance compared to the case of applying other negative electrode active materials.

Therefore, in order to improve the high capacity and rapid charging performance of lithium secondary batteries, a variety of negative electrode active materials have been researched. For example, silicon has been found to be capable of reversibly adsorb and release large amounts of lithium through compound formation reaction with lithium, and a lot of research on this has been conducted recently. Silicon has a theoretical maximum capacity of approximately 4020 mAh/g (9800 mAh/cc, specific gravity 2.23), which is significantly larger than that of graphitic-based materials, and thus has useful advantages as a high-energy density and/or high-capacity negative electrode material. However, silicon induces large volume changes (~300%) during charging and discharging, as well as does not have high-rate discharge characteristics, and thus has limitations in that the lifespan and rapid discharge efficiency of lithium secondary batteries including the silicon are not high.

Therefore, in order to fundamentally solve such problems, there is a high need for negative electrode technology that can simultaneously implement high rapid charge and discharge performance and lifespan characteristics.

[Summary]

[Technical Problem]

An object of the present disclosure is to provide a negative electrode for lithium secondary battery having improved rapid charge and discharge performance, enabling charging of the secondary battery in a short time, having a high charge and discharge capacity, and exhibiting excellent lifespan characteristics, and a manufacturing method thereof.

[Technical Solution]

To solve the problems described above,
The present disclosure provides a negative electrode, comprising:

a negative electrode current collector, and a negative electrode active layer provided on at least one side of the negative electrode current collector and including a carbon-based negative electrode active material and a silicon-based negative electrode active material,
wherein the silicon-based negative electrode active material is included from 0.1 wt.% to 10 wt.% based on the weight of the overall negative electrode active material,
wherein the negative electrode active layer has an orientation index (O.I) of a carbon-based negative electrode active material in a range from 5 to 15 according to the following equation 1:

$$[\text{Equation 1}]$$

$$O.I = I_{004}/I_{110}$$

in Equation 1, $I_{004}$ indicates the area of the peak representing the (004) crystal surface of the carbon-based negative electrode active material in an X-ray diffraction spectroscopy (XRD) analysis of the negative electrode active layer, $I_{110}$ indicates the area of the peak representing the (110) crystal surface of the carbon-based negative electrode active material in an X-ray diffraction spectroscopy (XRD) analysis of the negative electrode active layer.

Here, the silicon-based negative electrode active material may be included in an amount of 0.1 wt.% or more and less than 5 wt.% based on the weight of the overall negative electrode active material.
In addition, the orientation index (O.I) of the carbon-based negative electrode active material may be in the range of 7 to 11.
Moreover, an average particle diameter ($D_{50}$) of the carbon-based negative electrode active material may be in the range of 1 $\mu$m to 30 $\mu$m, and an average particle diameter ($D_{50}$) of the silicon-based negative electrode active material may be in the range of 0.5 $\mu$m to 20 $\mu$m.
In addition, the carbon-based negative electrode active material may include one or more types of natural graphite and artificial graphite, respectively.
Further, the silicon-based negative electrode active material may include one or more types of silicon (Si), silicon carbide (SiC), and silicon oxide ($SiO_q$, wherein $0.8 \leq q \leq 2.5$).
In addition, the average thickness of the negative electrode active layer may be in the range of 50,um to 500,um.
In addition, an aspect of the present disclosure provides a method of manufacturing a negative electrode according to the present disclosure, comprising:

applying a negative electrode slurry to at least one side of a negative electrode current collector;
applying magnetic field to the applied negative electrode slurry; and
drying the negative electrode slurry to which the magnetic field is applied to form a negative electrode active layer.

In this case, the step of applying the magnetic field may be performed for a duration of 1 second to 20 seconds.
In addition, the step of applying the magnetic field may be performed with a magnetic field strength in the range of 1,000 G to 7,000 G.
Further, the present disclosure provides, in one aspect , a lithium secondary battery including:

an electrode assembly including a positive electrode, a negative electrode according to the present disclosure, and a separator disposed between the positive electrode and the negative electrode; and
an electrolyte composition with which the electrode assembly is impregnated.

In this case, the positive electrode may include a positive electrode active material layer provided on at least one side of the positive electrode current collector and including one or more types of the lithium metal oxides represented by the following chemical formula 1 and chemical formula 2:

[Chemical formula 1] $\quad Li_x[Ni_yCo_zMn_wM^1_v]O_2$

[Chemical formula 2] $\quad LiM^2_pMn_{2-p}O_4$

in Chemical Formula 1 and Chemical Formula 2,

$M^1$ is an element of one or more types of W, Cu, Fe, V, Cr, Ti, Zr, Zn, Al, In, Ta, Y, La, Sr, Ga, Sc, Gd, Sm, Ca, Ce, Nb, Mg, B, and Mo,

x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, and $y+z+w+v=1$,

$M^2$ is Ni, Co or Fe,

p is $0.05 \leq p \leq 1.0$.

Specifically, the positive electrode active material may be one or more types of $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, and $LiNi_{0.3}Mn_{1.7}O_4$.

Meanwhile, the electrode assembly may be a stack-type electrode assembly; a zigzag-type electrode assembly; or a zigzag-stack-type electrode assembly.

[Advantageous Effects]

The negative electrode for a lithium secondary battery according to one aspect of the present disclosure includes a carbon-based negative electrode active material and a silicon-based negative electrode active material in a predetermined content ratio, and by controlling the orientation index (O.I) of the carbon-based negative electrode active material of the negative electrode active layer including them to a certain range, it has the characteristics of high charge and discharge capacity as well as excellent lifespan characteristics. Moreover, the lithium secondary battery comprising the same has the advantage of having excellent output characteristics and can be charged in a short time even at a 1C-rate.

[Brief Description of the Drawings]

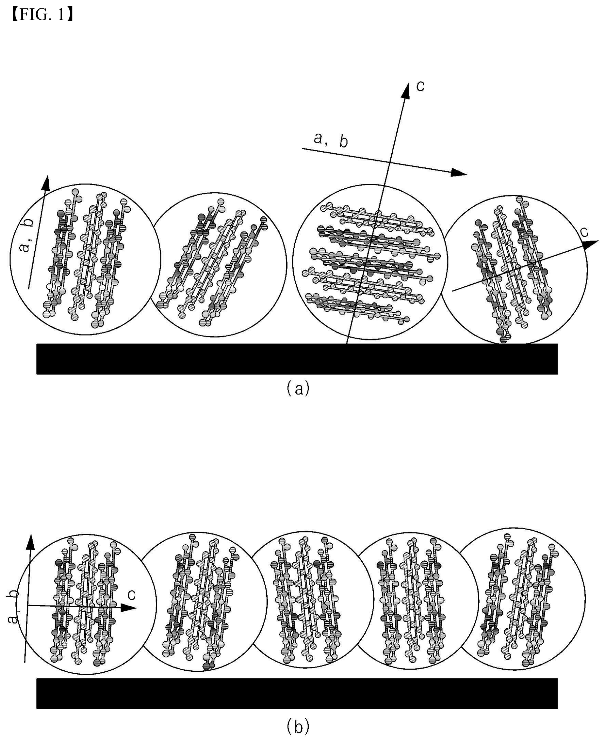

The Figure 1 is an image illustrating the alignment of the a-b axis crystal surfaces of graphite with and without the application of a magnetic field to the negative electrode slurry when forming a negative active layer, wherein (a) is the case in which the crystal surfaces of graphite are not aligned because the magnetic field is not applied, and (b) is the case in which the crystal surfaces of graphite are aligned because the magnetic field is applied.

[Detailed Description]

The present disclosure may have various modifications and various aspects, and thus specific aspects thereof will be described in detail below.

However, it should be understood that the present disclosure is not limited to the specific aspects, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

In addition, in the present disclosure, "including as a major component" can mean including at least 50 wt.% (or at least 50 vol.%), at least 60 wt.% (or at least 60 vol.%), at least 70 wt.% (or at least 70 vol.%), at least 80 wt.% (or at least 80 vol.%), at least 90 wt.% (or at least 90 vol.%), at least 95 wt.% (or at least 95 vol.%) of a defined component relative to the total weight (or total volume) of the negative electrode active material. For example, "comprising graphite as a primary component as a negative electrode active material" may mean including at least 50 wt.%, at least 60 wt.%, at least 70 wt.%, at least 80 wt.%, at least 90 wt.%, or at least 95 wt.% of graphite, based on the total weight of the negative electrode active material, and in some cases may mean that the entire negative electrode active material is graphite, comprising at least 100 wt.% of graphite.

Moreover, as used herein, "carbon-based negative electrode active material is oriented" or "carbon-based negative electrode active material is aligned" means that certain crystal surfaces (e.g., ab-axis crystal surfaces of graphite) representing the two-dimensional plane structure of the carbon-based negative electrode active material comprising the negative electrode active material particles are arranged to have a predetermined slope based on the surface of the negative electrode current collector, which may differ from the carbon-based negative electrode active material particles themselves being arranged to have a specific direction within the negative electrode active layer.

Further, "highly oriented carbon-based negative electrode active material" may mean that a particular crystal surface (e.g., an ab-axis crystal surface of graphite) representing a two-dimensional planar structure of the carbon-based negative electrode active material contained in the negative electrode active layer has a predetermined slope based on the surface of the negative electrode current collector. In addition, in some cases, it may mean that the crystal surfaces of the carbon-based negative electrode active material contained in the negative electrode active layer are arranged at a high angle (e.g., a near vertical angle, greater than 45°; more specifically, greater than 60°) based on the surface of the negative electrode current collector.

In addition, " high orientation index (O.I) of the carbon-based negative electrode active material" may mean that the "orientation index (O.I)" referred to herein has a large value, such that certain crystal surfaces (e.g., ab-axis crystal surfaces of graphite) representing a two-dimensional plane structure of the carbon-based negative electrode active material contained in the negative electrode active layer are arranged at a low angle (e.g., less than 45°) based on the surface of the negative electrode current collector. Conversely, "low orientation index (O.I.) of the carbon-based negative electrode active material" may mean that the "orientation index (O.I)" has a small value, such that the crystal surface of the carbon-based negative electrode active material contained in the negative electrode active layer is arranged at a high angle (e.g., a near vertical angle, 45° or more; specifically, 60° or more) based on the surface of the negative electrode current collector.

Further, as used herein, the term "crystal surface of the carbon-based negative electrode active material" may refer to a surface on which the atoms of the carbon-based negative electrode active material form the shape of a crystal, which in the present disclosure may mean a crystal surface comprising a plane of the carbon-based negative electrode active material, or a crystal surface comprising the a-axis/b-axis/ab-axis of the carbon-based negative electrode active material crystal.

In addition, as used herein, "average particle diameter $(D_{50})$" refers to the particle diameter at which the sum value of the particle diameter distribution of the particles is 50%, which is also referred to as the median diameter. The average particle diameter may be measured in methods conventionally known in the art. For example, the average particle diameter can be measured using a particle size analyzer or an analyzer based on laser diffraction particle size distribution measurement.

Further, as used herein, "aspect ratio" refers to the ratio of the shortest dimension to the longest dimension that passes through the center of a two-dimensional particle when performing a cross-sectional structure analysis of a negative electrode active material or projecting as a two-dimensional particle.

Also, "average aspect ratio" refers to the number-weighted mean average of the aspect ratios of each particle in the population of active material particles. The aspect ratio may be determined by measuring it with a particle shape analyzer, or by measuring the shape of the particle using a scanning electron microscope (SEM), energy dispersive spectrometer, or the like, and then analyzing the measured results.

Hereinafter, the present disclosure will be described in more detail.

**Negative electrode for lithium secondary battery**

The present disclosure provides, in one embodiment, a negative electrode comprising:

a negative electrode current collector, and a negative electrode active layer provided on at least one side of the negative electrode current collector and including a carbon-based negative electrode active material and a silicon-based negative electrode active material,
wherein the silicon-based negative electrode active material is included from 0.1 wt.% to 10 wt.% based on the weight of the overall negative electrode active material,
wherein the negative electrode active layer has an orientation index (O.I) of a carbon-based negative electrode active material in a range from 5 to 15 according to the following equation 1:[Equation 1]O.I = $I_{004}/I_{110}$
in Equation 1,$I_{004}$ indicates the area of the peak representing the (004) crystal surface of the carbon-based negative electrode active material in an X-ray diffraction spectroscopy (XRD) analysis of the negative electrode active layer,$I_{110}$ indicates the area of the peak representing the (110) crystal surface of the carbon-based negative electrode active material in an X-ray diffraction spectroscopy (XRD) analysis of the negative electrode active layer.

A negative electrode for a lithium secondary battery according to one aspect of the present disclosure includes a negative electrode active layer on at least one side of the negative electrode current collector. The negative electrode active layer is a layer that implements the electrical activity of the negative electrode and includes as a main component a negative electrode active material that implements an electrochemical oxidation-reduction reaction during charging and discharging of the battery. The negative electrode active material includes a carbon-based negative electrode active material and a silicon-based negative electrode active material.

Here, the carbon-based negative electrode active material refers to a material having carbon atom as a main component. Such carbon-based negative electrode active material may include graphite.

The graphite may include any one or more of natural graphite, and artificial graphite. In addition, the graphite may further include, in addition to natural graphite and artificial graphite, mesophase calcined carbon (bulk mesophase) derived from tar and pitch, graphitized coke (raw coke, green coke, pitch coke, needle coke, petroleum coke, etc.), and the like.

Specifically, the negative electrode active layer according to one aspect of the present disclosure may include artificial graphite alone. The present disclosure includes artificial graphite alone in the negative electrode active layer, which significantly improves the lifespan of the negative electrode, which can be advantageous in conditions where frequent charging should be endured for a long time, such as in automobile batteries. Moreover, compared to natural graphite, artificial graphite has the advantage of being favorable for rapid charging and having excellent output performance.

In addition, the negative electrode active layer according to one aspect of the present disclosure may include natural graphite and artificial graphite together, in which case the mixing ratio of natural graphite and artificial graphite may be 5%-50%:50%-95%, 20%-45%:55%-80%, or 5%-15%:85%-95% based on the weight. The present disclosure can maintain a high rapid charging speed and output performance by including natural graphite and artificial graphite together in the negative electrode active layer in the above content ratios. In addition, it is possible to prevent the adhesion between the negative electrode current collector and the negative electrode active layer from deteriorating due to a large volume change of the silicon-based negative electrode active material during charging and discharging.

In addition, the carbon-based negative electrode active material may have a rounded particle shape, respectively, rather than a shape such as a plate shape, a sheet shape, a flake shape, an acicular shape, or the like. Here, a rounded particle shape may refer to a particle having a non-angular shape. Such particles may be spherical or ellipsoid in shape when cross-sectional structure analysis is performed or when projected as a two-dimensional particle, and in some cases may be amorphous where the shape is difficult to define.

For example, the carbon-based negative electrode active material may be graphite having a spherical particle shape. In this case, the spherical particles may be processed to have a spherical shape/form during manufacture or may be an assembly of a spherical flake graphite formed by an aggregation of a plurality of flake graphite. If the spherical particles are assemblies, one graphite assembly may be formed by an aggregation of 2 to 100, preferably 3 to 20, of flake graphite. The present disclosure can further increase the electrical conductivity of the negative electrode active layer by controlling the shape of the carbon-based negative electrode active material as described above and can improve the adhesion between the negative electrode active layer and the negative electrode current collector by maximizing the contact area with the negative electrode current collector.

In addition, the carbon-based negative electrode active material may be an ellipsoid. In this case, the carbon-based negative electrode active material can be more easily secured as a transport path for lithium ions in the negative electrode active layer, thereby enabling charging to be completed in a shorter time even if charging is performed under the same conditions. Further, the carbon-based negative electrode active material may be adjusted in size to a certain range. Specifically, the average particle diameter ($D_{50}$) of the carbon-based negative electrode active material may be in the range of $1\mu m$ to $20\mu m$; $1\mu m$ to $15\mu m$; $1\mu m$ to $10\mu m$; $1\mu m$ to $8\mu m$; $1\mu m$ to $5\mu m$; $1\mu m$ to $3\mu m$; $10\mu m$ to $20\mu m$; $11\mu m$ to $19\mu m$; $8\mu m$ to $15\mu m$; $13\mu m$ to $24\mu m$; $13\mu m$ to $19\mu m$; $14\mu m$ to $17\mu m$; $5\mu m$ to $8\mu m$; $7\mu m$ to $14\mu m$; $9\mu m$ to $13\mu m$; $2\mu m$ to $6\mu m$; $5\mu m$ to $9\mu m$; $1\mu m$ to $4.5\mu m$; or $1\mu m$ to $3\mu m$.

The present disclosure can control the average particle diameter of the carbon-based negative electrode active material to the above range, thereby easily suppressing an increase in the electrical resistance of the negative electrode active layer. Additionally, in the above average particle diameter range, the carbon-based negative electrode active material can increase the specific surface area per unit weight while maximizing the degree of disorder in the expansion direction for each of the particles so as to prevent the expansion of the particles due to the charging of the lithium ions, thereby further increasing the adhesion between the negative electrode active layer and the negative electrode current collector. In addition, the carbon-based negative electrode active material has the advantage of securing a transport path for the lithium ions within the average particle diameter range, thereby further improving the rapid charging performance. However, when the carbon-based negative electrode active material has a particle diameter lower than the lower limit value of the average particle diameter ($D_{50}$), a large amount of binder is needed due to an increase in the number of particles per unit volume, and thus the electrical properties of the negative electrode active layer including them may be degraded. On the other hand, having a higher particle diameter exceeding the upper limit value of the above average particle diameter ($D_{50}$) may significantly increase the expansion rate of the negative electrode active material during charging and discharging of the secondary battery, so that the binding property of the negative electrode active material particles; and the binding property of the negative electrode active material particles and the negative electrode current collector may decrease as the charging and discharging are repeated, thereby significantly decreasing the cycling characteristics.

In addition, the silicon-based negative electrode active material refers to a material having silicon atoms as a main component. Such silicon-based negative electrode active materials include silicon (Si), silicon carbide (SiC), silicon monoxide (SiO), or silicon dioxide ($SiO_2$), etc., which may be included alone or in combination in the negative electrode active layer. When the silicon-based negative electrode active material, silicon monoxide (SiO) and silicon dioxide ($SiO_2$) are uniformly mixed or compounded and included in the negative electrode active layer, they may be represented as silicon oxide ($SiO_q$, wherein $0.8 \leq q \leq 2.5$).

Moreover, the silicon-based negative electrode active material may be doped or alloyed with Li, Mg, Al, Ca or Ti, etc. In addition, the silicon-based negative electrode active material may be surface treated with a carbon coating layer or the like on the surface for the purpose of suppressing volume expansion during charging when containing oxygen(O) while also improving the electrical conductivity of the negative electrode active material.

In addition, the silicon-based negative electrode active material may be adjusted for size in a certain range. Specifically, the average particle diameter ($D_{50}$) of the silicon-based negative electrode active material may be in the range of $0.5 \mu m$ to $20 \mu m$, more specifically, $0.5 \mu m$ to $15 \mu m$; $0.5 \mu m$ to $13 \mu m$; $0.5 \mu m$ to $9 \mu m$; $0.5 \mu m$ to $6 \mu m$; $0.5 \mu m$ to $4 \mu m$; $0.5 \mu m$ to $2 \mu m$; $9 \mu m$ to $18 \mu m$; $10 \mu m$ to $17 \mu m$; $7 \mu m$ to $14 \mu m$; $14 \mu m$ to $18 \mu m$; $12 \mu m$ to $18 \mu m$; $11 \mu m$ to $15 \mu m$; $4 \mu m$ to $8 \mu m$; $4 \mu m$ to $13 \mu m$; $5 \mu m$ to $12 \mu m$; $7 \mu m$ to $11 \mu m$; $1 \mu m$ to $5 \mu m$; $3 \mu m$ to $8 \mu m$; $1 \mu m$ to $3 \mu m$; or $1 \mu m$ to $2 \mu m$.

Here, the average particle diameter (Ds) of the silicon-based negative electrode active material may have a predetermined ratio with the average particle diameter (Dc) of the carbon-based negative electrode active material. For example, the ratio (Ds/Dc) of the average particle diameter of the silicon-based negative electrode active material and the average particle diameter of the carbon-based negative electrode active material may be from 0.5 to 0.9. Specifically, the ratio may be 0.5 to 0.8; 0.5 to 0.7; 0.6 to 0.9; or 0.5 to 0.65. The present disclosure can implement a high charge and discharge capacity of the negative electrode by keeping the average particle diameter ratio (Ds/Dc) of the silicon-based negative electrode active material and the carbon-based negative electrode active material equal to or higher than the above lower limit value. Moreover, by implementing a high orientation index of the carbon-based negative electrode active material in the negative electrode active layer, the transport path of the lithium can be easily shortened, and thus a high rapid charging performance can be implemented.

In addition, by maintaining the above average particle diameter ratio (Ds/Dc) equal to or lower than the upper limit value, it is possible to prevent i) degradation of the negative electrode active material; and ii) deterioration of the adhesion between the negative electrode active material and the negative electrode current collector due to changes in the volume of the silicon-based negative electrode active material during charging and discharging; and iii) lower orientation of the carbon-based negative electrode active material.

Moreover, the silicon-based negative electrode active material may be included from 0.1 to 10 wt.% by weight of the overall negative electrode active material. Specifically, the silicon-based negative electrode active material based on the overall negative electrode active material may be 0.1 wt.% to 9 wt.%; 0.1 wt.% to 8 wt.%; 0.1 wt.% to 7 wt.%; 0.1 wt.% to 6 wt.%; 0.1 wt.% to 5 wt.%; 0.5 wt.% to 8 wt.%; 1 wt.% to 6 wt.%; 1 wt.% to 5 wt.%; 3 wt.% to 7 wt.%; 0.5 wt.% to 3 wt.%; or 2 wt.% to 6 wt.%. The present disclosure can minimize the volume change rate due to the silicon-based negative electrode active material during charging and discharging by adjusting the content ratio of the silicon-based negative electrode active material in the negative electrode active material to the above range, so that the lithium transport path of the carbon-based negative electrode active material implemented in the negative electrode active layer can be maintained due to the application of a magnetic field. Accordingly, the negative electrode according to one aspect of the present disclosure can significantly improve the lifespan characteristics while implementing a high charge capacity and can significantly improve the charging speed of the secondary battery.

Further, the negative electrode according to one aspect of the present disclosure may control the crystal structure characteristics of the carbon-based negative electrode active materials contained in the negative electrode active layer in order to implement a fast charging speed. Specifically, the negative electrode active layer may have an orientation index (O.I) of the carbon-based negative electrode active material in a range from 5 to 15 according to the following equation 1:

$$[\text{Equation 1}]$$

$$O.I = I_{004}/I_{110}$$

in Equation 1, $I_{004}$ indicates the area of the peak representing the (004) crystal surface of the carbon-based negative electrode active material in an X-ray diffraction spectroscopy (XRD) analysis of the negative electrode active layer, $I_{110}$ indicates the area of the peak representing the (110) crystal surface of the carbon-based negative electrode active material in an X-ray diffraction spectroscopy (XRD) analysis of the negative electrode active layer.

The orientation index (O.I) of the carbon-based negative electrode active material when measured by X-ray diffraction (XRD) may be an indicator of the extent to which the ab-axis crystal surface of the carbon-based negative electrode active material is oriented in a certain direction, specifically, with respect to the surface of the negative electrode current collector. Specifically, the negative electrode active layer shows peaks of $2\theta=26.5\pm0.2°$, $42.4\pm0.2°$, $43.4\pm0.2°$, $44.6\pm0.2°$, $54.7\pm0.2°$, and $77.5\pm0.2°$ for the carbon-based negative electrode active material, that is graphite, in the X-ray diffraction measurement. This shows the (002) face, (100) face, (101) R face, (101) H face, (004) face, and (110) face of graphite. Here, the peak showing at $2\theta=43.4\pm0.2°$ may be seen as an overlap of the peaks corresponding to the (101)R face of the carbon-based negative electrode active material and the (111) face of the current collector, such as copper (Cu).

Among these, the orientation index (O.I.) of the carbon-based negative electrode active material can be measured by the ratio of the area obtained by integrating the respective intensities of the peak at $2\theta=54.7\pm0.2°$ showing the (004) face and the peak at $2\theta=77.5\pm0.2°$ showing the (110) face.

Since the peak at $2\theta=54.7\pm0.2°$ is a peak indicating a crystal surface of the carbon-based negative electrode active material having a slope with respect to the negative electrode current collector, the orientation index (O.I) of the carbon-based negative electrode active material may mean that a value closer to 0 means that the slope with respect to the surface of the negative electrode current collector is closer to 90°, and a larger value means that the slope with respect to the surface of the negative electrode current collector is closer to 0° or 180°. In other words, the negative electrode active layer according to one aspect of the present disclosure with respect to the negative electrode current collector may be aligned such that the carbon-based negative electrode active material contained in the layer has an angle of 60° or more, 70° or more, 70° to 90°, 80° to 90°, 65° to 85°, or 70° to 85°. Accordingly, the negative electrode active layer may have a lower orientation index (O.I) of the carbon-based negative electrode active material compared to a case where the carbon-based negative electrode active material is aligned at a lower angle of less than 60°.

Here, the orientation index (O.I) may be indicative of the degree to which the carbon-based negative electrode active material particles are aligned on the surface of the negative electrode current collector. In addition, in some cases, the orientation index (O.I) is indicative of the degree of alignment of the ab-axis crystal surface of the carbon-based negative electrode active material in the negative electrode active layer.

As used herein, "carbon-based negative electrode active material is oriented" or "carbon-based negative electrode active material is aligned" may mean that certain crystal surfaces (e.g., a-b axis crystal surfaces of graphite) showing the two-dimensional plane structure of the carbon-based negative electrode active material comprising the negative electrode active material particles, as shown in (b) of the Figure, are arranged to have a predetermined slope based on the surface of the negative electrode current collector. This may differ from, for example, the a-b axis crystal surfaces of the grains included in the carbon-based negative electrode active material particles as shown in (a) of the Figure, wherein the a-b axis crystal surfaces are aligned internally within the particles but are not oriented with respect to the negative electrode current collector. In addition, the alignment of the ab-axis crystal surfaces of the carbon-based negative electrode active material may also induce rotation of the particles of the carbon-based negative electrode active material contained in the negative electrode active layer. However, since the rotation of the particles in this case is influenced by the shape of the particles and is therefore not equivalent compared to the degree to which the ab-axis crystal surface is aligned, it may be difficult for the above orientation index (O.I) to indicate that the particles of the carbon-based negative electrode active material are aligned.

Here, the negative electrode active layer may have an orientation index (O.I) in a range of 5 to 15, more specifically in a range of 5 to 13; 5 to 11; 5 to 9; 7 to 15; 10 to 15; 7 to 13; 7 to 11; 7.5 to 10; 6 to 9.5; or 7.5 to 9.5.

When the orientation index (O.I) of the carbon-based negative electrode active material contained in the above negative electrode active layer is less than the lower limit value described above, the adhesion with the negative electrode current collector may be reduced. Accordingly, the present disclosure provides that by adjusting the orientation index (O.I) of the carbon-based negative electrode active material contained in the negative electrode active layer to a value equal to or more than the lower limit value described above, the adhesion between the negative electrode active layer and the negative electrode current collector can be improved to the extent that the crystal surface of the carbon-based negative electrode active material molecules comprising the negative electrode active material particles is increased to the extent that the rapid charging performance of the negative electrode is not reduced. In addition, by adjusting the orientation index (O.I) of the carbon-based negative electrode active material contained in the negative electrode active layer to equal to or less than the upper limit value described above, the present disclosure can secure an ion migration channel in which lithium ions can migrate in a shorter distance inside the negative electrode active layer. As a result, the negative electrode of the present disclosure can prevent an increase in resistance due to a long migration distance of the lithium ions, and thus can further increase the migration speed of the lithium ions during charging and discharging, thereby simultaneously improving rapid charging performance and output performance with high safety.

Specifically, conventionally, rapid charging of lithium secondary batteries is performed by a constant current-constant voltage (CC-CV) method of charging, which increases the speed by performing charging under high C-rate conditions exceeding 1 C-rate. In general, in the constant current-constant voltage (CC-CV) method of charging, the diffusion of lithium ions in the electrode during charging proceeds during the constant current (CC) charging step, which inevitably causes concentration polarization due to prolonged diffusion. Such concentration polarization of lithium ions easily causes lithium precipitation at the negative electrode, especially under high-rate conditions where the amount of current (A) charged compared to the rated capacity value (Ah) of the secondary battery exceeds the standard value (in other words, the amount of current at 1C-rate: 1A), which has the limitation of significantly lowering the safety of the secondary battery. In addition, the high-rate constant current-constant voltage (CC-CV) method of charging reaches the upper limit value at a very fast rate during the constant current (CC) charging stage, so that the current may drop to the preset limit value before the active material is fully consumed. In other words, the charging time is significantly increased during the constant voltage (CV) charging stage, so that the reduction effect of the total time to charge the secondary battery is insignificant.

However, the present disclosure can secure a shorter ion migration channel for lithium ions in the negative electrode active layer, and thus can significantly reduce the resistance induced in the negative active layer during charging. Such a decrease in resistance may lead to a time of performing the constant current (CC) charging step being longer than the time of performing the constant voltage (CV) charging step in the overall charging time when charging by the constant current-constant voltage (CC-CV) method of charging. Here, the constant current (CC) charging step has the same charge capacity per unit time because the same amount of current flows, but the constant voltage (CV) charging step shows a tendency that the current is reduced to maintain the same voltage; in other words, the charge capacity per unit time is sharply reduced in the constant voltage (CV) charging step, so that the overall charging time can be significantly reduced as the performance time of the constant current (CC) charging step increases. Therefore, the present disclosure can increase the performance time of the constant current (CC) charging step by controlling the orientation index (O.I) of the carbon-based negative electrode active material, thereby enabling the charging of the secondary battery to be completed in a significantly shorter time.

Furthermore, since the rapid charging of such a secondary battery can be implemented under standard value (e.g., 1C-rate) conditions rather than high-rate C-rate conditions, it is advantageous to overcome a safety problem of a lithium secondary battery due to a concentration polarization phenomenon of lithium ions induced in the negative electrode active layer during charging.

Meanwhile, the average thickness of the negative electrode active layer may be in a range of $50\mu m$ to $500\mu m$, and more specifically, it may be in a range of $100\mu m$ to $400\mu m$; $200\mu m$ to $350\mu m$; $50\mu m$ to $180\mu m$; $80\mu m$ to $150\mu m$; $100\mu m$ to $250\mu m$; or $130\mu m$ to $190\mu m$.

The present disclosure can easily control the crystalline characteristics of each carbon-based negative electrode active material contained in the negative electrode active layer by adjusting the average thickness of the negative electrode active layer to the above range. Accordingly, the negative electrode of the present disclosure has the advantage of not only implementing a high adhesion between the negative electrode active layer and the negative electrode current collector, but also enabling rapid charging that can complete charging in a short time even under standard conditions (1C-rate).

In addition, the negative electrode active layer according to one aspect of the present disclosure may selectively further comprise conductive materials, binders, other additives, and the like as needed, along with the negative electrode active material as the main component.

The conductive material may include one or more of carbon black, acetylene black, ketjen black, carbon nanotubes, carbon fibers, and the like, but is not limited thereto.

For example, the negative electrode active layer may contain carbon black, carbon nanotubes, carbon fibers, and the like as conductive materials, either alone or in combination.

In this case, the content of the conductive material may be 0.1 to 10 parts by weight based on 100 parts by weight of the overall negative electrode active layer, and more specifically, it may be 0.1 to 8 parts by weight, 0.1 to 5 parts by weight, 0.1 to 3 parts by weight, 2 to 6 parts by weight, or 0.5 to 2 parts by weight. The present disclosure can control the content of the conductive material to a range as described above, thereby preventing a problem in which the resistance of the negative electrode increases due to a low content of the conductive material, resulting in a decrease in the charge capacity, and a problem in which the content of the negative electrode active material decreases due to an excessive amount of the conductive material, resulting in a decrease in the charge capacity, or a problem in which the rapid charge characteristic decreases due to an increase in the loading amount of the negative electrode active layer.

Moreover, the binder may be appropriately applied as a component that assists in coupling the negative electrode active material and the conductive material or the like to the current collector to the extent that it does not degrade the electrical properties of the electrode, specifically, may include any one or more selected from the group consisting of polyvinylidene fluoride-hexafluoropropylene copolymer (PVDF-co-HFP), polyvinylidenefluoride (PVdF), polyacrylonitrile, and polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorinated rubber.

The content of the binder may be 0.1 to 10 parts by weight based on the overall 100 parts by weight of the negative electrode active layer, and more specifically, it may be 0.1 to 8 parts by weight, 0.1 to 5 parts by weight, 0.1 to 3 parts by weight, or 2 to 6 parts by weight. The present disclosure can control the content of the binder contained in the negative electrode active layer to the above range, thereby preventing the adhesion of the active layer from deteriorating due to a low content of the binder or the electrical properties of the electrode from deteriorating due to an excess of the binder.

In addition, the negative electrode current collector is not particularly limited as long as it has a high conductivity without causing chemical changes to the battery, and for example, copper, stainless steel, nickel, titanium, calcined carbon, and the like can be used, and in the case of copper or stainless steel, a surface treatment with carbon, nickel, titanium, silver, and the like can also be used. Furthermore, the average thickness of the negative electrode current collector may be appropriately applied from 1 $\mu$m to 500$\mu$m, considering the conductivity and overall thickness of the negative electrode to be manufactured.

**Lithium Secondary Battery**

Further, the present disclosure provides, in one embodiment, a lithium secondary battery including an electrode assembly including a positive electrode, a negative electrode of the present disclosure described above, and a separator disposed between the positive electrode and the negative electrode; and

an electrolyte composition with which the electrode assembly is impregnated.

The lithium secondary battery according to one aspect of the present disclosure includes an electrode assembly of a structure in which a plurality of positive electrodes and a plurality of negative electrodes are alternately disposed, and a separator is located therebetween. The lithium secondary battery comprises the negative electrodes of the present disclosure as described above, and has a large charge and discharge capacity, excellent lifespan characteristics, and can be charged in a short time even at a 1C-rate, and thus can be usefully used as a power source for medium and large devices such as electric vehicles, etc.

In this case, the negative electrode has the same configuration as the configuration described above, and thus a specific description is omitted.

In addition, the positive electrode includes a positive electrode active material layer comprising a positive electrode active material on the positive electrode current collector, and the positive electrode active material layer may selectively further include conductive materials, binders, other additives, and the like as needed.

The positive electrode active material may comprise one or more of the lithium metal oxides represented by the following chemical formula 1 and chemical formula 2, which are capable of reversibly intercalating and deintercalating lithium ions, as a material capable of electrochemically reacting on the positive electrode collector:

[Chemical formula 1]        $Li_x[Ni_yCo_zMn_wM^1_v]O_2$

[Chemical formula 2]        $LiM^2_pMn_qP_rO_4$

in Chemical Formula 1 and Chemical Formula 2,

$M^1$ is an element of one or more types of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, and $y+z+w+v=1$,
$M^2$ is Ni, Co or Fe,
p is $0.05 \leq p \leq 1.0$,
q is 2-p,
r is 0 or 1.

The lithium metal oxide represented by chemical formula 1 and chemical formula 2 is a material containing a high content of nickel (Ni) and manganese (Mn), respectively, and when used as a positive electrode active material, it has the advantage of being able to stably supply electricity of high capacity and/or high voltage compared to conventionally used positive electrode active materials such as lithium iron phosphate ($LiFeO_4$).

In this case, the lithium metal oxide represented by the above chemical formula 1 may include$LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, and the like, and the lithium metal oxide represented by the above chemical formula 2 may include $LiNi_{0.7}Mn_{1.3}O_4$; $LiNi_{0.5}Mn_{1.5}O_4$; $LiNi_{0.3}Mn_{1.7}O_4$, and the like, which may be used alone or in combination.

In addition, the positive electrode active material may be included in an amount of 85 parts by weight or more based on the positive electrode active material layer, and more specifically may be included in an amount of 90 parts by weight or more, 93 parts by weight or more, or 95 parts by weight or more.

Moreover, the positive electrode active material layer may further include conductive materials, binders, other additives, and the like together with the positive electrode active material.

In this case, the conductive material used to improve the electrical performance of the positive electrode may be any conductive material conventionally used in the art, but may specifically include at least one or more selected from the group consisting of natural graphite, artificial graphite, carbon black, acetylene black, denka black, ketjen black, super-P, channel black, furnace black, lamp black, thermal black, graphene, and carbon nanotubes.

Moreover, the conductive material may be included in an amount of 0.1 to 5 parts by weight based on the weight of each positive electrode active material layer, and more particularly may be comprised in an amount of 0.1 to 4 parts by weight; 2 to 4 parts by weight; 1.5 to 5 parts by weight; 1 to 3 parts by weight; 0.1 to 2 parts by weight; or 0.1 to 1 part by weight.

In addition, the binder plays a role in binding the positive electrode active material, the positive electrode additive, and the conductive material to each other, and can be used without being particularly limited as long as it has such function. Specifically, the binder may include one or more types of resins selected from the group consisting of polyvinylidenefluoride-hexafluoropropylene copolymer (PVdF-co-HFP), polyvinylidenefluoride (PVdF), polyacrylonitrile, polymethylmethacrylate, and copolymers thereof. For example, the binder may include polyvinylidenefluoride.

Additionally, the binder may include 1 to 10 parts by weight based on the weight of each positive electrode active material layer, more specifically, 2 to 8 parts by weight; or 1 to 5 parts by weight.

The total thickness of the positive electrode active material layer is not particularly limited, but may be in the range of $50\mu m$ to $300\mu m$, and more particularly may be in the range of $100\mu m$ to $200\mu m$; $80\mu m$ to $150\mu m$; $120\mu m$ to $170$,um; $150\mu m$ to $300\mu m$; $200\mu m$ to $300\mu m$; or $150\mu m$ to $190\mu m$.

In addition, the positive electrode can use, as a current collector, a material having a high conductivity without causing chemical changes in the battery. For example, stainless steel, aluminum, nickel, titanium, calcined carbon, or the like may be used, and in the case of aluminum or stainless steel, a surface treatment with carbon, nickel, titanium, silver, or the like may be used. Moreover, the average thickness of the current collector may be appropriately applied from $3\mu m$ to $500\mu m$, considering the conductivity and the overall thickness of the positive electrode to be manufactured.

Moreover, the separator interposed between the positive electrode and the negative electrode of each unit cell is an insulating thin film having high ion permeability and mechanical strength and may be any polymer conventionally used in the art, but is not particularly limited thereto, and may include one or more types of polymers such as polypropylene; polyethylene; and polyethylene-propylene copolymers, which are chemically resistant and hydrophobic. The separator may have the form of a porous polymeric base substrate such as a sheet or a nonwoven fabric, etc. including the polymer described above, and in some cases, it may also have the form of a composite separator in which organic or inorganic particles are coated by an organic binder on the porous polymeric base substrate. Moreover, the separator may have an average diameter of the pores of $0.01\mu m$ to $10\mu m$, and an average thickness of $5\mu m$ to $300\mu m$.

Meanwhile, the lithium secondary battery according to one aspect of the present disclosure may be in the form of a secondary battery that may include a stack-type; a zigzag-type; or a zigzag-stack-type electrode assembly but is not particularly limited thereto. Specifically, a lithium secondary battery according to one aspect of the present disclosure may be a pouch-type secondary battery or a prismatic secondary battery.

Pouch-type secondary batteries and/or prismatic secondary batteries have the advantage of being highly utilizable in terms of energy density, as the unit cells of the secondary battery can be packed with a high density within a limited space.

Further, in the lithium secondary battery, the electrolyte composition may be used without being particularly limited as long as it is conventionally applied to lithium secondary batteries.

Specifically, the electrolyte composition may include a non-aqueous organic solvent, a lithium salt and an electrolyte additive, and the like.

Here, the non-aqueous organic solvent may be any organic solvent known in the art for use in non-aqueous electrolytes, without particular limitation. For example, the non-aqueous organic solvents include N-methyl-2-pyrrolidinone, ethylene carbonate (EC), propylene carbonate (PC), butylene carbonate, dimethyl carbonate (DMC), diethyl carbonate (DEC), gamma-butylolactone, 1,2-dimethoxyethane (DME), tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxymethane, dioxolane derivatives, sulfolane, methyl sulfolane, 1,3-dimethyl-2-imidazolidinone, propylene carbonate derivatives, tetrahydrofuran derivatives, ether, methyl pyrophosphate (MP), ethyl propionate (EP), propyl propionate (PP), and other non-amphoteric organic solvents may be used.

In addition, one type of non-aqueous organic solvent used in the present disclosure can be used alone, and two or more types can be mixed in any combination or ratio to be appropriate for the usage. Among them, from the point of view of electrochemical stability to oxidation-reduction and chemical stability with respect to heat or reaction with solutes, it is particularly preferable to mix propylene carbonate, ethylene carbonate, fluoroethylene carbonate, diethyl carbonate, dimethyl carbonate, ethylmethyl carbonate, and the like.

Moreover, the lithium salts may be applied without particular limitation to any non-aqueous electrolyte known in the art. Specifically, the lithium salt may include one or more types of LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, and $(FSO_2)_2NLi$.

The lower limit of the range of appropriate concentration for appropriately using the lithium salt is 0.5mol/L or more, more specifically 0.7mol/L or more, more specifically 0.9mol/L or more, and the upper limit is 2.5mol/L or less, specifically 2.0mol/L or less, more specifically 1.5mol/L or less. When the concentration of the lithium salt is lower than 0.5mol/L, there is a possibility that the cycle characteristics, output characteristics of the non-aqueous electrolyte battery may be degraded by decreasing the ionic conductivity. In addition, if the concentration of the lithium salt exceeds 2.5mol/L, the viscosity of the electrolyte for the non-aqueous electrolyte battery increases, which again may decrease the ionic conductivity, which may decrease the cycle characteristics and output characteristics of the non-aqueous electrolyte battery.

In addition, if a large amount of lithium salt is dissolved in a non-aqueous organic solvent at one time, the temperature of the electrolyte may increase due to the heat of dissolution of the lithium salt. In the case of lithium salts containing fluorine, if the temperature of the non-aqueous organic solvent is significantly increased due to the heat of dissolution of the lithium salt, decomposition may be facilitated, and hydrogen fluoride (HF) may be generated. Therefore, the temperature of dissolving the lithium salt in the non-aqueous organic solvent is not particularly limited, but may be controlled from -20°C to 80°C, and more particularly may be controlled from 0°C to 60°C.

Furthermore, the electrolyte additive may be included as an additional auxiliary component to improve the properties of the electrolyte composition. Any commonly used electrolyte additive may be added to the non-aqueous electrolyte of the present disclosure in any proportion. Specifically, compounds having an overcharge prevention effect, a negative electrode film forming effect, a positive electrode protection effect, such as cyclohexylbenzene, biphenyl, t-butylbenzene, carbonate, vinyl ethylene carbonate, difluoroanisole, fluoroethylene carbonate, propanesulfone, succinonitrile, dimethylvinylene carbonate, etc. In addition, it is also possible to use electrolytes for non-aqueous electrolyte batteries by solidifying them with gelling agents or cross-linking polymers, such as when used in non-aqueous electrolyte batteries called lithium polymer batteries.

The lithium secondary battery according to one aspect of the present disclosure has the advantage that by having the above-described configuration, the battery has a large charge capacity, excellent lifespan characteristics, and can be charged in a short time even at a 1C-rate.

## Method of manufacturing negative electrode

In addition, the present disclosure, in an embodiment, provides a method of manufacturing a negative electrode according to the present disclosure, comprising:

applying a negative electrode slurry to at least one side of a negative electrode current collector;
applying magnetic field to the applied negative electrode slurry; and
drying the negative electrode slurry to which the magnetic field is applied to form a negative electrode active layer.

A method of manufacturing a negative electrode according to the present disclosure refers to a method of manufacturing a negative electrode of the present disclosure as described above. The method of manufacturing the negative electrode can manufacture a negative electrode having a negative electrode active material layer having a controlled crystalline characteristics of the negative electrode active material by applying a negative electrode slurry on a negative electrode current collector, applying a magnetic field to the surface of the applied negative electrode slurry, and drying each negative electrode slurry.

Here, the step of applying the negative electrode slurry is coating the surface of the moving negative electrode current collector by discharging the negative electrode slurry containing the carbon-based negative electrode active material. This step may be applied in any method conventionally applied in the art without particular limitation, but preferably uses a die coating method. The die coating method may be performed by means of a slot die having a shim for controlling the discharge condition of the negative electrode slurry. In this case, by controlling the shape, position, etc. of the shim, the loading amount, application thickness, etc. of the negative electrode slurry applied on the negative electrode current collector can be easily controlled.

Meanwhile, the step of applying a magnetic field to the negative electrode slurry may be controlling the crystalline characteristics of the negative electrode active material contained in the negative electrode slurry. Specifically, the step may be applying magnetic field to a surface of the negative electrode slurry applied on the negative electrode current collector to align the ab-axis crystal surface of each carbon-based negative electrode active material included in the negative electrode slurry to have a high angle with respect to the negative electrode current collector.

At this time, the magnetic field application may be applied by magnetic portions disposed in the upper portion and the lower portion of the negative electrode current collector, which is moved with the negative electrode slurry applied to the surface. The polarities of the magnetic portions disposed in the upper portion and the lower portion may be different from each other.

Moreover, the orientation index (O.I) of the carbon-based negative electrode active material contained in each negative electrode slurry may be adjusted by a strength of the applying magnetic field, an application time, or the like, and accordingly, the step of applying the magnetic field may be performed under a predetermined magnetic field strength condition.

Specifically, the step of applying the magnetic field may be applied with a magnetic field in a range of 10,000 G (Gauss) or less, specifically, the magnetic field may be applied with a strength in the range of 1,000 G to 7,000 G; 2,000 G to 6,000 G; 1,500 G to 5,000 G; 1,500 G to 4,500 G; 4,000 G to 7,000 G; 2,000 G to 4,000 G; 2,500 G to 3,500 G; 3,000 G to 6,500 G; or 2,700 G to 3,300 G.

In addition, the step of applying the magnetic field may be performed for 1 second to 20 seconds, and more specifically, may be performed for 1 second to 15 seconds; 1 second to 10 seconds; 5 seconds to 20 seconds; 10 seconds to 20 seconds; 11 seconds to 18 seconds; 1 second to 5 seconds; 7 seconds to 13 seconds; or 6 seconds to 11 seconds.

For example, in the step of applying the magnetic field, a magnetic field of 3,000±50 G may be applied to the negative electrode slurry for 9 seconds to 11 seconds.

Further, the step of applying the magnetic field, as described above, may be performed by magnetic portions introduced into the upper portion and the lower portion of the applied negative electrode slurry, but the size of the magnetic portions may be adjusted to be larger than the size of the negative electrode slurry so that the magnetic field applied to the negative electrode slurry may be uniformly applied to the overall surface of the negative electrode slurry. For example, the magnetic portion may have a length ratio based on the length in the width direction of the negative electrode slurry, in the range of 105% to 200% and specifically, may have a length ratio in the range of 110% to 180%; 110% to 160%; 110% to 140%; 110% to 130%; 130% to 150%; or 105% to 120% based on the length in the width direction of the negative electrode slurry.

The present disclosure can be uniformly implemented to make the orientation index (O.I) of the carbon-based negative electrode active material contained in the negative electrode slurry satisfy a predetermined range by controlling the magnetic field strength, the application time, and/or the magnetic portion size as described above in the step of applying magnetic field.

In addition, the step of forming the negative electrode active layer may include the steps of drying the negative electrode slurry; and rolling the dried negative electrode slurry.

In this case, the step of drying the negative electrode slurry may be applied in a method that can maintain the orientation of the carbon-based negative electrode active material contained in the negative electrode active layer, without particular limitation.

For example, the step of drying may be drying the negative electrode slurry by applying heat energy to the negative electrode slurry using a hot air dryer, a vacuum oven or the like.

Moreover, the step of rolling the dried negative electrode slurry is increasing the density of the negative electrode active layer by applying pressure to the dried negative electrode slurry using a roll press or the like. At this time, the rolling may be performed at a temperature condition higher than room temperature.

Specifically, the rolling may be performed at a temperature in the range of 50°C to 100°C, more specifically, at a temperature in the range of 60°C to 100°C; 75°C to 100°C; 85°C to 100°C; 50°C to 90°C; 60°C to 80°C; or 65°C to 90°C. More specifically, the rolling may be performed at a rolling speed ranging from 2m/s to 7m/s, and more specifically, the rolling may be performed at a rolling speed ranging from 2m/s to 6.5m/s; 2m/s to 6m/s; 2m/s to 5.5m/s; 2m/s to 5m/s; 2m/s to 4.5m/s; 2m/s to 4m/s; 2.5m/s to 4m/s; 2.5m/s to 3.5m/s; 3.5m/s to 5m/s; 5m/s to 7m/s; 5.5m/s to 6.5m/s; or 6m/s to 7m/s. Moreover, the rolling may be performed under a pressure condition in the range of 50MPa to 200MPa, specifically, under a pressure condition in the range of 50MPa to 150MPa; 50MPa to 100MPa; 100MPa to 200MPa; 150MPa to 200MPa; or 80MPa to 140MPa.

The present disclosure can increase the energy density of the negative electrode while minimizing the change in the orientation index of the carbon-based negative electrode active material contained in the formed negative electrode active layer by performing the rolling of the dried negative electrode slurry under the above temperature, speed and/or pressure conditions.

Hereinafter, the present disclosure will be described in more detail by examples and experimental examples.

However, the following examples and experimental examples are only illustrative of the present disclosure, and the present disclosure is not limited to the following examples and experimental examples.

**Examples 1 to 9 and Comparative Examples 1 to 3. Manufacturing negative electrode for lithium secondary battery**

As carbon-based negative electrode active material, primary particles in flake form were assembled to prepare secondary particles of artificial graphite; natural graphite, respectively and silicon dioxide ($SiO_2$) was prepared as silicon-based negative electrode active material. In addition, styrene butadiene rubber (SBR) as a binder; carboxymethylcellulose (CMC) as a thickening agent were prepared.

Then, 96 parts by weight of carbon-based negative electrode active material and silicon-based negative electrode active material, 1.5 parts by weight of carboxymethylcellulose (CMC), and 2.5 parts by weight of styrene butadiene rubber (SBR) were mixed with water to reach 50% solid content to prepare a negative electrode slurry. At this time, i) the overall negative electrode active material weight-based content ratio of the carbon-based negative electrode active material and the silicon-based negative electrode active material and ii) their respective average particle diameter were adjusted as shown in Table 1 below.

Once the negative electrode slurry was prepared, the negative electrode slurry was cast on a copper thin plate (thickness: 10 $\mu$m) under roll-to-roll transfer (transfer speed: 5 m/min) using a single die coater.

Permanent magnets having a length ratio of 110% to 120% of the length in the width direction of the applied negative electrode slurry were disposed in the upper portion of the negative electrode slurry and in the lower portion of the negative electrode current collector, and magnetic field was applied with a magnetic field strength of 3,000 $\pm$20 G. At this time, the time at which the magnetic field was applied is shown in Table 1. The negative electrode slurry with the magnetic field applied was hot air dried to form a negative electrode in the form of a sequentially stacked negative electrode active layer on the negative electrode current collector. The formed negative active layer was rolling at 50+1 °C at a pressure of 100 MPa to 150 MPa and a transfer speed of 3 m/s to prepare negative electrodes for lithium secondary batteries (average thickness of the negative active layer: 160 $\pm$5 $\mu$m, loading amount: 5-20 mg/cm$^2$).

For each of the manufactured negative electrodes, X-ray diffraction spectroscopy (XRD) of the negative electrode active layer was performed and the spectrum was measured. The measurement conditions for X-ray diffraction (XRD) were as the following:

- Target: Cu (K$\alpha$ ray) graphite monochromator.
- Slit: Divergence slit = 1 degree, Reception slit = 0.1 mm, Scattering slit = 1 degree
- Measurement area: (110) face: 76.5° < 2$\theta$ < 78.5° / (004) face: 53.5° < 2$\theta$ < 56.0°.

From the spectrum measured under the above conditions, the average orientation index (O.I) of the carbon-based negative electrode active material contained in each negative electrode active layer was calculated using equation 1. The results are shown in Table 1:

[Equation 1]

$$O.I = I_{004}/I_{110}$$

in Equation 1, $I_{004}$ indicates the area of the peak representing the (004) crystal surface in an X-ray diffraction spectroscopy (XRD) analysis of the negative electrode active layer, $I_{110}$ indicates the area of the peak representing the (110) crystal surface in an X-ray diffraction spectroscopy (XRD) analysis of the negative electrode active layer.

[Table 1]

| | Content ratio [wt.%] | | | Average particle diameter[$D_{50}$, $\mu$m] | | Negative electrode active layer | Magnetic field application | |
| --- | --- | --- | --- | --- | --- | --- | --- | --- |
| | Natural graphite | Artificial graphite | SiO | Carbon-based | Silicon-based | Orientationindex(O.I) | Yes or No | Time |
| Example 1 | - | 95.0 | 5.0 | 15 | 10 | 8 | O | 9~11 seconds |
| Example 2 | 7.6 | 87.4 | 5.0 | 15 | 10 | 9 | O | 9~11 seconds |
| Example 3 | 7.4 | 85.6 | 7.0 | 15 | 10 | 8 | O | 9~11 seconds |
| Example 4 | 7.2 | 82.8 | 10.0 | 15 | 10 | 9 | O | 9~11 seconds |
| Example 5 | 7.6 | 87.4 | 5.0 | 15 | 3 | 8 | O | 9~11 seconds |
| Example 6 | 7.6 | 87.4 | 5.0 | 15 | 6 | 9 | O | 9~11 seconds |
| Example 7 | 7.6 | 87.4 | 5.0 | 15 | 12.5 | 8 | O | 9~11 seconds |

(continued)

| | Content ratio [wt.%] | | | Average particle diameter[$D_{50}$, $\mu$m] | | Negative electrode active layer | Magnetic field application | |
|---|---|---|---|---|---|---|---|---|
| | Natural graphite | Artificial graphite | SiO | Carbon-based | Silicon-based | Orientationindex(O.I) | Yes or No | Time |
| Example 8 | 7.6 | 87.4 | 5.0 | 15 | 15 | 11 | O | 9~11 seconds |
| Example 9 | 7.6 | 87.4 | 5.0 | 15 | 10 | 15 | O | 1~2 seconds |
| Comparative example 1 | 8 | 92.0 | 0 | 15 | 10 | 7 | O | 9~11 seconds |
| Comparative example 2 | 6.8 | 78.2 | 15.0 | 15 | 10 | 10 | O | 9~11 seconds |
| Comparative example 3 | 7.6 | 87.4 | 5.0 | 15 | 10 | 23 | X | 0 second |

**Examples 10 to 18 and Comparative Examples 4 to 6. Manufacturing lithium secondary battery**

A positive electrode was manufactured by preparing $LiNi_{0.7}Co_{0.1}Mn_{0.1}Al_{0.1}O_2$ having a particle size of $5\mu$m as an active material, mixing it with carbon-based conductive material and polyvinylidene fluoride as a binder in a weight ratio of 94:3:3 in N-methyl pyrrolidone (NMP) to form a slurry, casting it on an aluminum thin plate, drying it in a vacuum oven at 120°C, and then rolling it.

A separator comprising $18\mu$m of polypropylene was interposed between the positive electrode obtained above and the negative electrode manufactured in Examples 1 to 9 and Comparative Examples 1 to 3, respectively, inserted into the case, and an electrolyte composition was injected to assemble a 1Ah-grade lithium secondary battery.

At this time, the types of negative electrodes applied to each lithium secondary battery are shown in Table 2 below.

[Table 2]

| | Type of negative electrode applied |
|---|---|
| Example 10 | Negative electrode manufactured in Example 1 |
| Example 11 | Negative electrode manufactured in Example 2 |
| Example 12 | Negative electrode manufactured in Example 3 |
| Example 13 | Negative electrode manufactured in Example 4 |
| Example 14 | Negative electrode manufactured in Example 5 |
| Example 15 | Negative electrode manufactured in Example 6 |
| Example 16 | Negative electrode manufactured in Example 7 |
| Example 17 | Negative electrode manufactured in Example 8 |
| Example 18 | Negative electrode manufactured in Example 9 |
| Comparative example 4 | Negative electrode manufactured in Comparative example 1 |
| Comparative example 5 | Negative electrode manufactured in Comparative example 2 |
| Comparative example 6 | Negative electrode manufactured in Comparative example 3 |

Experimental Example.

To evaluate the performance of the negative electrodes according to aspects of the present disclosure, the following experiments were performed on each of the negative electrodes and lithium secondary batteries manufactured in the Examples and Comparative Examples.

1) Lifespan characteristics evaluation

Each of the lithium secondary batteries manufactured in Examples 10 to 18 and Comparative Examples 4 to 6 was activated by charging under CC-CV condition at a rate of 0.3C to 4.2V at a temperature of 25°C and discharging to CC condition at a rate of 0.3C to 2.5V.

Charging each of the activated lithium secondary batteries under CC-CV condition up to 4.2V at a rate of 1.0C at a temperature of 25°C and discharging them to CC condition up to 2.5V at a rate of 1.0C was set as 1 cycle, and 1 cycle charge and discharge of each of the lithium secondary batteries manufactured in the examples and comparative examples was performed. At this time, the capacity during charging and discharging was measured to confirm the charge and discharge capacity of the first cycle. Then, 499 cycles of charging and discharging of each lithium secondary battery were performed, for a total of 500 cycles of charging and discharging. In this case, the charge and discharge capacity of the 500th cycle was confirmed at the end of the last cycle. Based on the measured charge and discharge capacity of the first cycle, the charge and discharge capacity retention rate of the 500th cycle was calculated. The results are shown in Table 3 below.

2) 1C-rate rapid charging evaluation

Each of the lithium secondary batteries manufactured in Examples 10 to 18 and Comparative Examples 4 to 6 was activated by charging at 25°C at a rate of 0.3C up to 4.2V under CC-CV condition and discharging at a rate of 0.3C up to 2.5V under CC condition.

Each activated lithium secondary battery was performed with a constant current-constant voltage (CC-CV) method of charging at a temperature of 25°C, and the time required for the state of charge (SOC) to reach 80% was measured. The charging was performed as a constant current (CC) charging with a current of 1.0 C-rate until the voltage reaches 4.2V, followed by a constant voltage (CV) charging that maintains 4.2V and cuts off when the current reaches 0.005 C-rate. The measured charging times are shown in Table 3 below.

[Table 3]

|  |  | Type of negative electrode | Capacity retention rate [%] | Charging time (SOC 80%) |
|---|---|---|---|---|
|  | Example 10 | Negative electrode manufactured in Example 1 | 80 | 20 |
|  | Example 11 | Negative electrode manufactured in Example 2 | 81 | 19 |
|  | Example 12 | Negative electrode manufactured in Example 3 | 76 | 21 |
|  | Example 13 | Negative electrode manufactured in Example 4 | 74 | 23 |
|  | Example 14 | Negative electrode manufactured in Example 5 | 72 | 28 |
|  | Example 15 | Negative electrode manufactured in Example 6 | 75 | 27 |
|  | Example 16 | Negative electrode manufactured in Example 7 | 53 | 29 |
|  | Example 17 | Negative electrode manufactured in Example 8 | 49 | 30 |
|  | Example 18 | Negative electrode manufactured in Example 9 | 80 | 35 |
|  | Comparative Example 4 | Negative electrode manufactured in Comparative Example 1 | 68 | 23 |
|  | Comparative Example 5 | Negative electrode manufactured in Comparative Example 2 | 6 | 24 |
|  | Comparative Example 6 | Negative electrode manufactured in Comparative Example 3 | 81 | 51 |

As shown in the Table 3 above, it can be seen that the negative electrodes for lithium secondary batteries according to one aspect of the present disclosure not only have excellent lifespan characteristics, but also complete charging at a fast speed under 1C-rate condition.

Specifically, the negative electrodes of the examples showed a high charge and discharge capacity retention rate of 70% or more after 500 cycles of charging and discharging. In addition, the secondary batteries of the examples comprising such negative electrodes reached a state of charge (SOC) of 80% in a short time of 30 seconds or less under the standard constant current-constant voltage (CC-CV) charging condition of 1C-rate.

On the other hand, the negative electrode of Comparative Example 1, which does not include silicon-based negative electrode active material, silicon dioxide ($SiO_2$), as the negative electrode active material, showed a relatively high charge and discharge capacity retention rate of approximately 68% after 500 cycles of charging and discharging, but the charge and discharge capacity of 1 cycle was found to be significantly lower compared to the negative electrodes of the examples including silicon dioxide ($SiO_2$).

In addition, the negative electrode of comparative example 2, which included an excessive amount of silicon dioxide ($SiO_2$), was confirmed to have a significantly lower charge and discharge capacity retention rate of approximately 6% after 500 cycles of charging and discharging. In addition, the negative electrode of Comparative Example 3, which included silicon dioxide ($SiO_2$) but a magnetic field was not applied during the formation of the negative electrode active layer, reached a state of charge (SOC) of 80% after a long time exceeding 50 seconds under standard constant current-constant voltage (CC-CV) charging condition of 1 C-rate.

This indicates that by controlling the orientation index (O.I) of the carbon-based negative electrode active material and the content of the silicon-based negative electrode active material included in the active material layer, the lifespan characteristics of the negative electrode and the charging speed under standard C-rate condition can be improved.

From these results, it can be seen that the negative electrode for lithium secondary battery according to one aspect of the present disclosure has a large charge and discharge capacity and excellent lifespan characteristics, and the lithium secondary battery including it can be charged in a short time even at 1 C-rate.

As above, the present disclosure has been described in more detail through the drawings and aspects. However, since the configuration described in the drawings or aspects described herein is merely one embodiment of the present disclosure and do not represent the overall technical spirit of the disclosure, it should be understood that the disclosure covers various equivalents, modifications, and substitutions at the time of filing of this application.

Thus, the technical scope of the present disclosure is not limited to what is described in the detailed description of the specification but should be determined by the claims of the patent.

**Claims**

1. A negative electrode comprising:

   a negative electrode current collector, and a negative electrode active layer including a negative electrode active material provided on at least one side of the negative electrode current collector,
   wherein the negative electrode active material includes a carbon-based negative electrode active material and a silicon-based negative electrode active material,
   wherein the silicon-based negative electrode active material is included in an amount of from 0.1 wt.% to 10 wt.% based on an overall weight of the negative electrode active material,
   wherein the negative electrode active layer has an orientation index (O.I) in a range from 5 to 15 according to a following Equation 1:

   $$[\text{Equation 1}]$$

   $$O.I = I_{004}/I_{110}$$

   in Equation 1,
   $I_{004}$ indicates an area of a peak representing a (004) crystal surface of the carbon-based negative electrode active material in an X-ray diffraction spectroscopy (XRD) analysis of the negative electrode active layer, and
   $I_{110}$ indicates an area of a peak representing a (110) crystal surface of the carbon-based negative electrode active material in an X-ray diffraction spectroscopy (XRD) analysis of the negative electrode active layer.

2. The negative electrode of claim 1, wherein the silicon-based negative electrode active material is included in an amount of 0.1 wt.% or more and less than 5 wt.% based on the overall weight of the negative electrode active material.

3. The negative electrode of claim 1, wherein the orientation index (O.I) of the negative electrode active layer is in a range of from 7 to 11.

4. The negative electrode of claim 1, wherein an average particle diameter $D_{50}$ of the carbon-based negative electrode active material is in a range of from 1$\mu$m to 30$\mu$m, and
   an average particle diameter $D_{50}$ of the silicon-based negative electrode active material is in a range of from 0.5$\mu$m to 20$\mu$m.

5. The negative electrode of claim 1, wherein the carbon-based negative electrode active material includes one or more of natural graphite or artificial graphite.

6. The negative electrode of claim 1, wherein the silicon-based negative electrode active material includes one or more of silicon (Si), silicon carbide (SiC), or silicon oxide represented by $SiO_q$, wherein $0.8 \leq q \leq 2.5$.

7. The negative electrode of claim 1, wherein an average thickness of the negative electrode active layer is in a range of from $50 \mu m$ to $500 \mu m$.

8. A method of manufacturing a negative electrode according to claim 1, comprising:

   applying a negative electrode slurry to at least one side of the negative electrode current collector;
   applying a magnetic field to the negative electrode slurry applied to at least one side of the negative electrode current collector; and
   after applying the magnetic field, drying the negative electrode slurry applied to at least one side of the negative electrode current collector to form a negative electrode active layer.

9. The method of manufacturing a negative electrode of claim 8, wherein applying the magnetic field is performed for a duration of from 1 second to 20 seconds.

10. The method of manufacturing a negative electrode of claim 8, wherein applying the magnetic field is performed with a magnetic field strength in a range of from 1,000 G to 7,000 G.

11. A lithium secondary battery comprising:

    an electrode assembly including a positive electrode, a negative electrode according to claim 1, and a separator disposed between the positive electrode and the negative electrode; and
    an electrolyte composition with which the electrode assembly is impregnated.

12. The lithium secondary battery of claim 11, wherein the positive electrode includes a positive electrode active material layer provided on at least one side of a positive electrode current collector, wherein the positive electrode active material layer includes one or more of a lithium metal oxide represented by a following chemical formula 1 or a lithium metal oxide represented by a following chemical formula 2:

    [Chemical formula 1]    $Li_x[Ni_yCo_zMn_wM^1_v]O_2$

    [Chemical formula 2]    $LiM^2_pMn_{2-p}O_4$

    in Chemical Formula 1 and Chemical Formula 2,

    $M^1$ is at least one of W, Cu, Fe, V, Cr, Ti, Zr, Zn, Al, In, Ta, Y, La, Sr, Ga, Sc, Gd, Sm, Ca, Ce, Nb, Mg, B, or Mo;
    $1.0 \leq x \leq 1.30$, $0.5 \leq y < 1$, $0 < z \leq 0.3$, $0 < w \leq 0.3$, $0 \leq v \leq 0.1$, and $y+z+w+v=1$;
    $M^2$ is Ni, Co or Fe; and
    p is $0.05 \leq p \leq 1.0$.

13. The lithium secondary battery of claim 12, wherein the positive electrode active material includes one or more of $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, or $LiNi_{0.3}Mn_{1.7}O_4$.

14. The lithium secondary battery of claim 11, wherein the electrode assembly is a stack-type electrode assembly; a zigzag-type electrode assembly; or a zigzag-stack-type electrode assembly.

【FIG. 1】

(a)

(b)

## INTERNATIONAL SEARCH REPORT

| International application No. |
|---|
| **PCT/KR2024/011504** |

| **A.** | **CLASSIFICATION OF SUBJECT MATTER** |
|---|---|

**H01M 4/133**(2010.01)i; **H01M 4/36**(2006.01)i; **H01M 4/587**(2010.01)i; **H01M 4/48**(2010.01)i; **H01M 4/131**(2010.01)i; **H01M 4/1393**(2010.01)i; **H01M 4/1391**(2010.01)i; **H01M 4/38**(2006.01)i; **H01M 10/052**(2010.01)i; **H01M 10/0583**(2010.01)i

According to International Patent Classification (IPC) or to both national classification and IPC

| **B.** | **FIELDS SEARCHED** |
|---|---|

Minimum documentation searched (classification system followed by classification symbols)

H01M 4/133(2010.01); C01B 32/205(2017.01); H01M 10/052(2010.01); H01M 10/0569(2010.01); H01M 4/134(2010.01); H01M 4/48(2010.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(anode), 규소계 음극 활물질 (silicon based-anode active material), 탄소계 음극 활물질(carbon based-anode active material), 중량(weight), 정렬도(O.I value)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | US 2023-0216089 A1 (CONTEMPORARY AMPEREX TECHNOLOGY CO., LIMITED) 06 July 2023 (2023-07-06)<br>See claims 1 and 15-18; paragraphs [0077], [0085]-[0093], [0107] and [0122]-[0124]; table 1; example 7; and figures 2 and 3. | 1-14 |
| A | KR 10-2021-0074287 A (NINGDE AMPEREX TECHNOLOGY LIMITED) 21 June 2021 (2021-06-21)<br>See claims 1, 3, 32, 39, 40, 47 and 49-52; and paragraphs [0056], [0057] and [0173]. | 1-14 |
| A | CN 111628141 A (ZHUHAI COSMX BATTERY CO., LTD.) 04 September 2020 (2020-09-04)<br>See abstract; claims 1-10; and table 1. | 1-14 |
| A | KR 10-2544496 B1 (LG ENERGY SOLUTION, LTD.) 20 June 2023 (2023-06-20)<br>See claims 1, 3-7 and 9-12; and paragraphs [0103]-[0106]. | 1-14 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 November 2024** | **20 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/011504** |

**C.     DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0064387 A (CONTEMPORARY AMPEREX TECHNOLOGY CO., LIMITED) 18 May 2022 (2022-05-18)<br>    See abstract; and claims 1-22. | 1-14 |

Form PCT/ISA/210 (second sheet) (July 2022)

**INTERNATIONAL SEARCH REPORT**
Information on patent family members

International application No.

**PCT/KR2024/011504**

| Patent document cited in search report | | | Publication date (day/month/year) | Patent family member(s) | | | Publication date (day/month/year) |
|---|---|---|---|---|---|---|---|
| US | 2023-0216089 | A1 | 06 July 2023 | CN | 116670844 | A | 29 August 2023 |
| | | | | CN | 116670844 | B | 09 August 2024 |
| | | | | CN | 118572195 | A | 30 August 2024 |
| | | | | EP | 4184650 | A1 | 24 May 2023 |
| | | | | EP | 4184650 | A4 | 25 September 2024 |
| | | | | WO | 2023-050414 | A1 | 06 April 2023 |
| KR | 10-2021-0074287 | A | 21 June 2021 | EP | 4016673 | A1 | 22 June 2022 |
| | | | | EP | 4016673 | A4 | 12 October 2022 |
| | | | | JP | 2022-514807 | A | 16 February 2022 |
| | | | | JP | 7178488 | B2 | 25 November 2022 |
| | | | | KR | 10-2668203 | B1 | 23 May 2024 |
| | | | | US | 2021-0391567 | A1 | 16 December 2021 |
| | | | | WO | 2021-102846 | A1 | 03 June 2021 |
| CN | 111628141 | A | 04 September 2020 | CN | 111628141 | B | 25 May 2021 |
| | | | | US | 2023-0123455 | A1 | 20 April 2023 |
| | | | | WO | 2022-012477 | A1 | 20 January 2022 |
| KR | 10-2544496 | B1 | 20 June 2023 | CN | 118541828 | A | 23 August 2024 |
| | | | | EP | 4447164 | A1 | 16 October 2024 |
| | | | | WO | 2024-136079 | A1 | 27 June 2024 |
| KR | 10-2022-0064387 | A | 18 May 2022 | CN | 113207314 | A | 03 August 2021 |
| | | | | EP | 3879601 | A1 | 15 September 2021 |
| | | | | EP | 3879601 | A4 | 29 December 2021 |
| | | | | EP | 3879601 | B1 | 29 May 2024 |
| | | | | JP | 2022-550187 | A | 30 November 2022 |
| | | | | US | 2021-0313575 | A1 | 07 October 2021 |
| | | | | WO | 2021-108983 | A1 | 10 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020230105344